# EUROPEAN PATENT SPECIFICATION

(11) **EP 3 967 904 B1**
(45) Date of publication and mention of the grant of the patent: **12.03.2025**
(21) Application number: 21196427.5
(22) Date of filing: 13.09.2021
(51) Int. Cl.: F16H 61/12, F16H 57/01, F16D 23/02

(54) **A METHOD AND A SYSTEM FOR MONITORING WEAR OF A SYNCHROMESH DEVICE**
VERFAHREN UND SYSTEM ZUR ÜBERWACHUNG DES VERSCHLEISSES EINER SYNCHRONGETRIEBEMASCHINE
PROCÉDÉ ET SYSTÈME DE SURVEILLANCE DE L'USURE D'UN SYNCHRONISEUR

(30) Priority: 14.09.2020 IT 202000021697
(43) Date of publication of application: 16.03.2022
(73) Proprietor: CNH Industrial Italia S.p.A., 10156 Torino (IT)
(72) Inventor: BERSELLI, Alberto, 41043 Modena (IT); MAZZETTI, Marco, Modena (IT); MONTALTI, Gaetano, Modena (IT); MORANDI, Gabriele, 41125 Modena (IT); PETRIGLIANO, Rocco, 75029 Valsinni, MT (IT); ZANASI, Nicholas, 41013 Modena (IT)
(74) Representative: CNH Industrial IP Department

(56) References cited:
- WO-A1-2019/039295
- DE-A1- 102015 214 017

## Description

### TECHNICAL FIELD

The invention concerns a method and a system for monitoring wear of a synchromesh device.

### BACKGROUND OF THE INVENTION

Vehicular gearboxes usually include synchromesh devices to synchronize the speeds of the gearbox input shaft and of the shaft of the gear being selected.

A synchromesh device includes an externally toothed hub fixed to the input shaft and an internally toothed sleeve adapted to axially slide onto the external surface of the hub under the action of a driving mechanism.

The synchromesh device also includes a synchronizer ring arranged between the sleeve and one of the gearwheels of the selected gear. The synchronizer ring has an external surface provided with teeth arranged to interact axially with the internal teeth of the sleeve and an internal conical friction surface that is arranged to cooperate with a corresponding conical surface on the body of the adjacent gearwheel.

While the sleeve is moved toward the gearwheel, the internal teeth of the sleeve meet the external teeth of the synchronizer ring without meshing therewith. This causes the synchronizer ring to be pushed toward the gearwheel.

Hence, the sleeve presses the synchronizer ring against the body of the gearwheel, such that the friction between the cooperating conical surfaces causes a smooth acceleration of the gearwheel and of the corresponding shaft until the speed thereof approaches the one of the input shaft.

Here, when the speeds are synchronized, the external teeth of the synchronizer ring start to mesh with the internal teeth of the sleeve, such that the external teeth form an axial guide for the internal teeth.

Thus, the sleeve slides further toward the gearwheel until it reaches an engaging position, in which the gear is engaged.

It comes up that the synchronizer ring is a key component to assure a smooth gearshift without production of noise. However, the conical surface of the synchronizer ring is inevitably subject to wear.

Once the frictional material of the synchronizer ring is worn out, the synchronization become noisy and, even worse, the lubricating oil of the transmission starts to be contaminated by the lost frictional material.

Therefore, the need is felt to detect preventively a fault in progress of the synchromesh device before the wear conditions become compromised.

An aim of the invention is to satisfy the above-mentioned need.

DE-A1-102015214017 discloses a method for determining a wear condition of a synchronizer ring, wherein the synchronizer ring is associated with a gear stage of a shiftable transmission of an agricultural working machine, wherein the synchronizer ring is shifted during a synchronizing process from a neutral position into a synchronizing position, wherein the synchronizer ring in the synchronizing position bears with a friction surface against a gear wheel and wherein at least the synchronizing position is detected. The wear condition is determined by means of a comparison of the detected synchronization position with a reference synchronization position.

WO2019039295A1 discloses an estimation apparatus for a synchronization device provided with a gear, a synchronizing sleeve, a synchronizer ring, a stroke sensor that can detect a shift stroke amount of the synchronizing sleeve, a stroke difference calculation unit that calculates a stroke difference which is a difference between a shift stroke amount at the start of synchronization and a shift stroke amount at the end of a gear-in operation on the basis of the detection value of the stroke sensor acquired during the gear-in operation, and an abrasion estimation unit that estimates an abrasion amount or an abrasion degree of a synchronizing element of the synchronization device on the basis of the stroke difference.

### SUMMARY OF THE INVENTION

The aforementioned aim is reached by a method and a system for monitoring wear of a synchromesh device, as claimed in the appended set of claims.

Dependent claims set out particular embodiments of the invention.

### BRIEF DESCRIPTION OF DRAWINGS

For a better understanding of the present invention, preferred embodiments are described in the following, by way of non-limiting examples, with reference to the attached drawings wherein:
- Figure 1 is a perspective view of a gearbox including a synchromesh device and a system according to the invention for monitoring wear of the synchromesh device;
- Figure 2 shows the synchromesh device and the system in perspective and in an enlarged scale;
- Figure 3 is a sectional view, in a further enlarged scale, of a detail of the synchromesh device;
- Figure 4 is a line chart representing the displacement of a sleeve of the synchromesh device during a gear engagement as a function of time and wear condition of the synchromesh device;
- Figure 5 is a further line chart comparing the measured displacements of two respective sleeves of a healthy and a worn out synchromesh device during successive gear engagements; and
- Figure 6 is a block diagram illustrating steps of a method for monitoring wear of the synchromesh device, according to the invention.

### DETAILED DESCRIPTION OF THE INVENTION

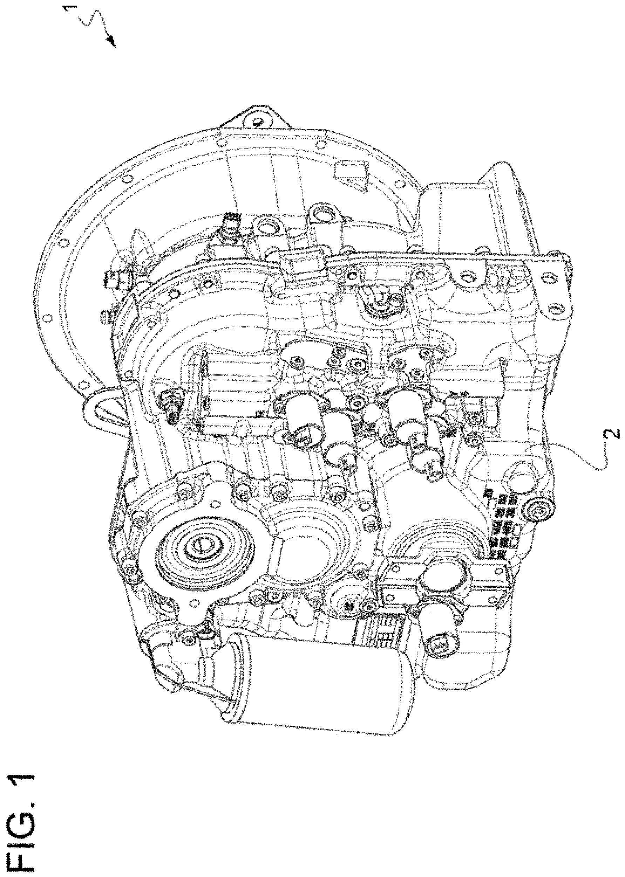

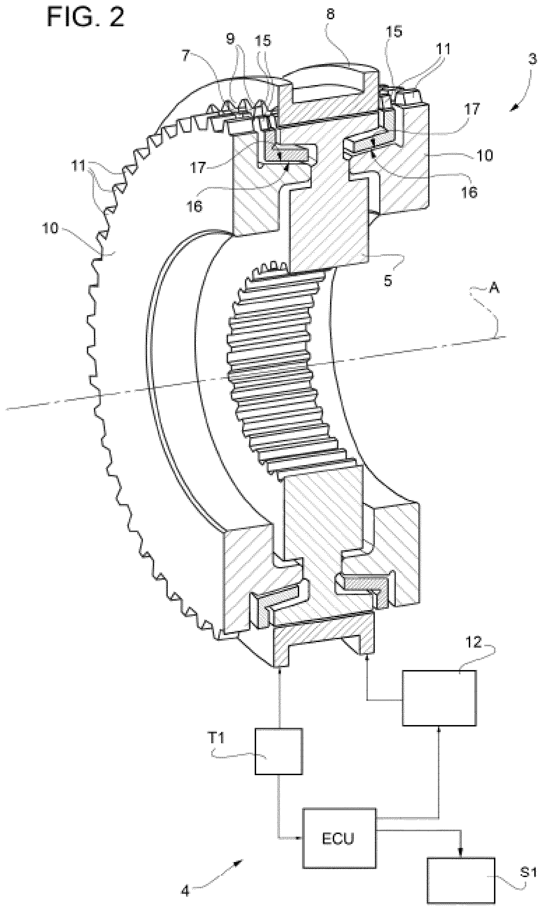

In Figure 1, reference numeral 1 indicates a vehicular gearbox including an external housing 2 and a synchromesh device 3 (shown in Figure 2) placed within the housing 2.

As shown in Figure 2, the gearbox 1 further includes a system 4 within the housing 2 for monitoring wear of the synchromesh device 3.

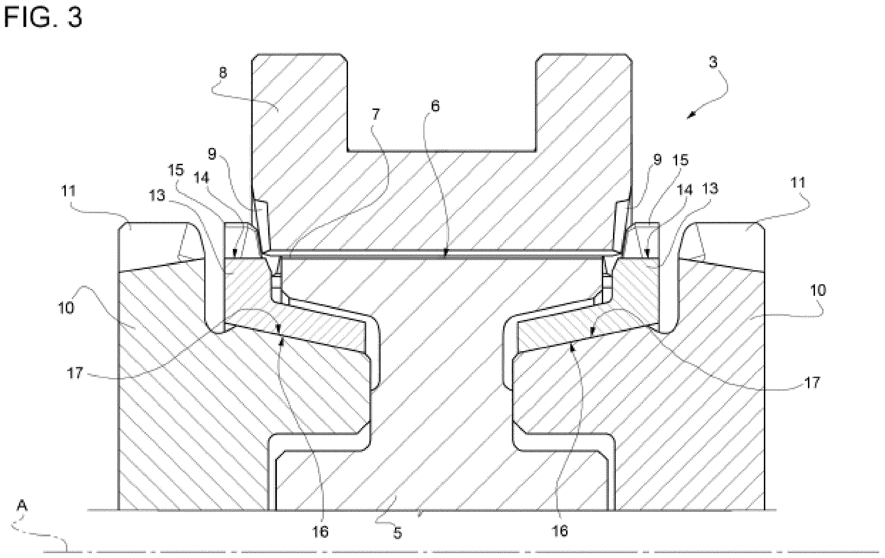

Synchromesh device 3 comprises a hub 5 that is rotationally fixed to a not shown input shaft of the gearbox 1, in particular by means of a spline coupling. Making also reference to Figure 3, hub 5 has an axis A and an annular splined external surface 6. In other words, hub 5 is externally toothed, i.e. is provided with external teeth 7.

Synchromesh device 3 further comprises a sleeve 8 that is arranged around axis A in a radially external position with respect to hub 5. Sleeve 8 is coupled to hub 5 in a rotationally fixed and axially movable manner; specifically, sleeve 8 is internally splined or has internal teeth 9 meshing with external teeth 7 to axially slide onto hub 5.

Sleeve 8 and hub 5 are arranged between two gearwheels of gearbox 1, of which only respective portions 10 are shown in Figures 2 and 3. The gearwheels are pertained to respective gears of gearbox 1 and are mounted on a same not shown output shaft of gearbox 1. Portions 10 are provided with external teeth 11, which are adapted to mesh with internal teeth 9 of sleeve 8. In other words, the sleeve 8 can be axially moved toward any one of the portions 10 to be engaged therewith.

Synchromesh device 3 comprises an assembly 12 (schematically represented in Figure 2) adapted to drive the sleeve 8 axially. For example, the assembly 12 may include an actuator or a manually drivable mechanism.

In order to allow a smooth engagement between the sleeve 8 and any one of the portions 10, synchromesh device 3 further comprises one synchronizer ring 13 for each portion 10 arranged between the sleeve 8 and the corresponding portion 10. Like portions 10, synchronizer rings 13 are identical to each other, whereby only one of them will be described hereinafter.

Synchronizer ring 13 has a splined external surface 14 or external teeth 15 that are configured to cooperate in contact with the internal teeth 9 of the sleeve 8 during an axial movement toward the corresponding portion 10. Moreover, synchronizer ring 13 has an internal frictional conical surface 16 that is arranged to cooperate in contact with a corresponding external conical surface 17 of the portion 10.

More in detail, during the axial movement of the sleeve 8 toward one portion 10, the internal teeth 9 are brought in axial contact with the external teeth 15 of the synchronizer ring 13. Here, the shape of the external teeth 15 is configured such that they do not perfectly mesh immediately with the internal teeth 9, but an axial thrust is exerted by the sleeve 8 onto the synchronizer ring 13 through the axial contact between the internal teeth 9 and the external teeth 15. In this manner, the conical surfaces 16, 17 are pressed against each other due to the axial thrust, such that friction is generated between the synchronizer ring 13 and the corresponding portion 10.

The generated friction causes a synchronization of the speeds of the hub 5, synchronizer ring 13, and the portion 10, i.e. of the speeds of the input and the output shaft of gearbox 1. During the synchronization, the same friction, and the cooperation between teeth 9, 15 cause the sleeve 8 to stop its axial movement and constantly stay in a stable position for the time needed for the completion of the synchronization. Nevertheless, the stable position remains constant for more than one time instant.

When the synchronization is completed, the internal teeth 9 are arranged to match the grooves defined by the splined surface 14. In other words, the internal teeth 9 can mesh with the external teeth 15 and the sleeve 8 can axially slide onto the synchronizer ring 13. In other words, the external teeth 15 or the synchronizer ring 13 are configured to guide the entire movement of the internal teeth 9 or the sleeve 8.

Immediately after the completion of the synchronization, the sleeve 8 is axially moved further toward the portion 10 until the internal teeth 9 mesh with the external teeth 11. Here, the gear associated to the meshing portion 10 is correctly engaged.

Therefore, to summarize, an engagement of a gear comprises an axial movement of the sleeve 8 by means of the assembly 12 from a first position, in which the gear is disengaged (i.e., in particular, the sleeve 8 is spaced from the synchronizer ring 13), to a third position, in which the gear is correctly engaged, passing through a second position, which is the stable or constant position described above, where the sleeve 8 rests in a pressed status against the synchronizer ring 13 that rests, in turn, in a pressed status against the portion 10.

For the sake of clarity, the first position identifies a position of the sleeve 8 in which the specific gear that has to be engaged is actually disengaged; however, this does not means that no other gears are engaged. In particular, for example, the engagement of the gear including one of the illustrated portions 10 may start from a first position in which the gear including the other opposite portion 10 is actually engaged.

The second position is also known in the field as the "synchro engagement position". Hereinafter, the latter expression will be used to identify the second position.

The synchro engagement position is automatically left by the sleeve 8 once the speeds of the sleeve 8 and of the portion 10 are the same. In case the assembly 12 is electronically controlled, the axial thrust provided to the sleeve 8 may for example remain constant during the whole engagement process. Otherwise, in case of manual actuation of the assembly 12, the thrust depends by the operator that actuates the same assembly 12.

Regarding the synchro engagement position, the Applicant discovered that the actual location of the sleeve 8 depends on the wear conditions of the synchromesh device 3, i.e. on the conditions of the frictional conical surface 16 of the synchronizer ring. Therefore, the entire displacement of the sleeve 8 during a gear engagement actually depends on the wear conditions.

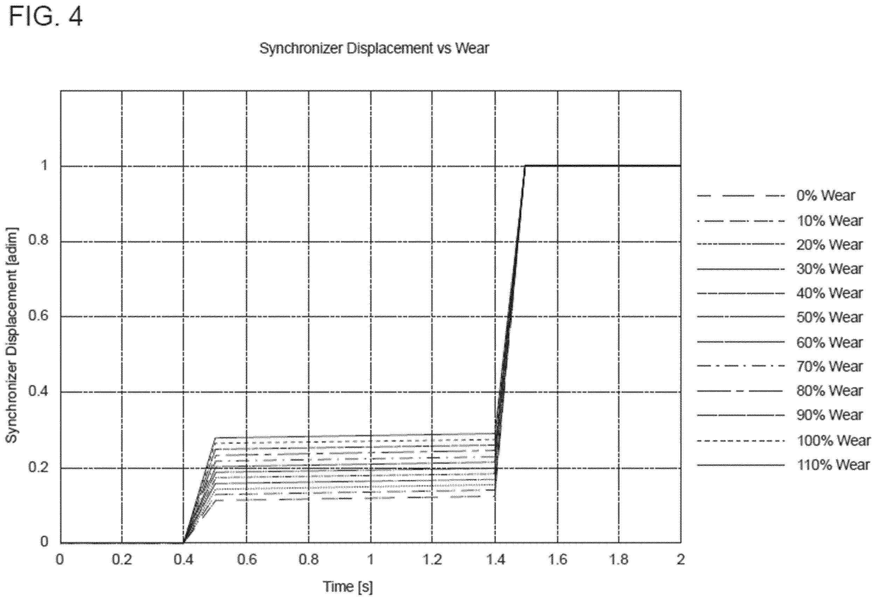

For example, Figure 4 shows the displacements of the sleeve 8 according to a computer simulation of a plurality of complete gear engagements under the respective assumptions of different wear conditions. In figure 4, the displacement for each gear engagement is represented in the ordinate axis with a dimensionless parameter taking values between zero and one, where zero represents the first position and one the third position. Clearly, the intermediate values represent respective intermediate positions. The displacement is represented as a function of time, which defines the abscissa axis of the chart in Figure 4. Hence, each line in Figure 4 or possibly a portion thereof represents a time function indicative of the displacement of the sleeve 8.

In Figure 4, the horizontal portions of the lines represent or indicate the respective synchro engagement positions based on the wear of the simulated synchromesh device 3. Each of those horizontal portions may be represented or indicated, for example, by a single position value.

The different wear conditions are represented in the legend of Figure 4 by a wear parameter that, in particular, is expressed by a percentage value. Here, the shown percentages in Figure 4 come from a ratio of two further percentages. The first percentage is given by the ratio between the lost volume of frictional material of the synchronizer ring 13 and the original volume before use. The other percentage is a threshold identifying an unacceptable value of the first percentage for the sake of safety. For this reason, the percentage shown in Figure 4 may overcome the 100% value.

The time functions that represent the displacement of the sleeve 8, as well as the values of the synchro engagement position, are indicative of a wear parameter, such as the percentage of Figure 4, and thus of the wear conditions of the synchromesh device 3.

In particular, the higher is the value of the synchro engagement position, the higher is the wear.

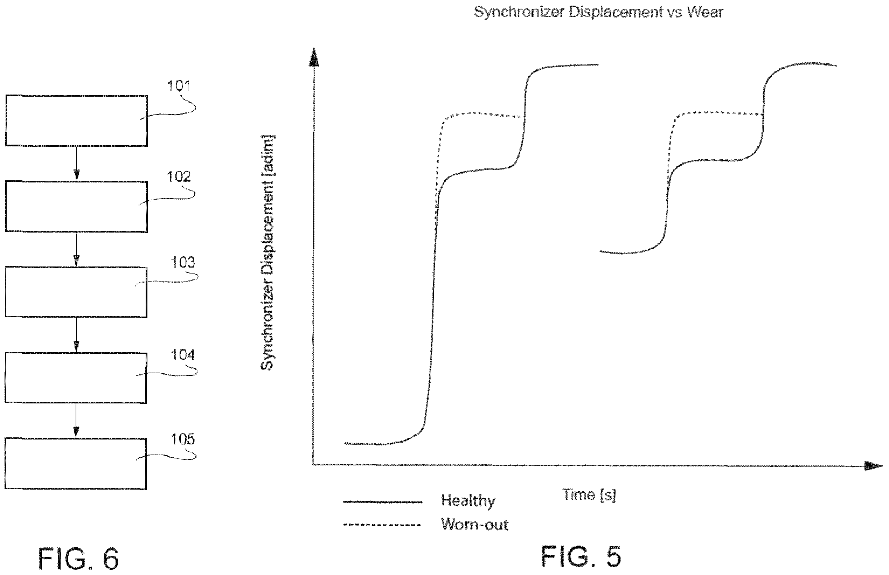

This has been confirmed also experimentally by the Applicant. For example, Figure 5 shows experimental measurements of the displacement of a sleeve of two further synchromesh devices, of which one is normally healthy (solid line) and the other one is completely worn out (dashed line). Evidently, the displacement of the sleeve of the worn out synchromesh device presents a significantly higher value of the synchro engagement position.

In view of the established correlation between the displacement of the sleeve 8 with the wear conditions of the synchromesh device 3, the system 4 is adapted to determine the actual wear conditions of the synchromesh device 3 and preferably to signal those conditions to a user.

System 4 comprises an electronic control or processing unit ECU, which stores or comprises information representative of the above correlation. In practice, time functions indicative of the displacement of the sleeve 8 or position values thereof, e.g. the values of the synchro engagement position, make part of a relative first set, according to the mathematical meaning of the term "set", whose elements are linked by a functional or statistical relationship to the elements of a second set defined by the values of a wear parameter, such as the percentage of Figure 4.

Control unit ECU stores or comprises the relationship, which may be functional or statistical, between the first and the second set, such that the same control unit ECU is configured to associate a time function or a position value to a value of a wear parameter indicative of the wear conditions of the synchromesh device 3.

System 4 further comprises a sensor or transducer T1 configured to measure a quantity indicative of the displacement of the sleeve 8. More precisely, the transducer T1 is configured to detect the quantity and accordingly generate a signal related to the detected quantity. Transducer T1 is a known-kind component and therefore is not described with further detail.

Control unit ECU is connected to transducer T1 to receive the signal generated thereby and extract information from the signal about the detected quantity. More in general, Control unit ECU acquires the information about the measured quantity from transducer T1.

With this information about the displacement of the sleeve 8, control unit ECU is configured to evaluate an actual value or time function belonging to the first set and to determine an actual value of the wear parameter from the evaluated actual value or time function, based on the stored relationship.

Control unit ECU may for example evaluate a single position value or a displacement, possibly partial, of the sleeve 8 as a function of time. The stored relationship is suited based on what entity the control unit ECU evaluates as a member of the first set (i.e. a function of time or a single value). In any case, the control unit ECU obtains the actual value of the wear parameter as a function of the evaluated element of the first set.

For example, with reference to Figure 4, the control unit ECU may evaluate based on the acquired information from transducer T1 a function of time corresponding to one of the lines shown. The stored relationship is used by the control unit to link directly the evaluated function of time to the corresponding percentage value of the wear parameter.

The function of time may be expressed, for example, in an analytic form or in a parametric form, such that the control unit ECU may store the relationship by just storing actually the parameters expressing the function of time.

The actual value of the wear parameter is indicative of the wear conditions, which may be communicated to the user. In particular, system 4 comprises a signaling device S1 for signaling the wear conditions. For instance, the signaling device S1 may include any one of a light indicator, a display, a sound emitter, and the like. Signaling device S1 is connected to control unit ECU to receive therefrom information about the wear conditions of the synchromesh device 3.

Preferably, control unit ECU also stores a wear scale having a plurality of wear ranges respectively associated to a plurality of ranges of the wear parameter. For example, the wear scale is defined by three wear ranges or levels, which are conveniently associable to respective distinct colors or, more in general, distinct identification signs.

The lower wear range, for example between 0% and 20% of Figure 4, identifies a healthy condition; the intermediate range, for example between 20% and 75%, identify a warning condition; and the higher range, for example from 75% up, identifies a worn condition. In particular, the three colors may be green for the lower range of wear, yellow for the intermediate range, and red for the higher range. Signaling device S1 shows the colors to the user based on the actual value of the wear parameter.

Preferably, the elements of the first set, i.e. the position values or the time functions are indicative of the synchro engagement constant position of the sleeve 8. For example, the elements of the first set may be the constant portions of the displacement of the sleeve 8, e.g. the horizontal lines in Figure 4, or the single position value of the synchro engagement position.

More preferably, the position values or the time functions are indicative of a difference between the value of the synchro engagement positon and a reference position that is indicative of a healthy condition of the synchromesh device 3.

Such a reference position may be stored in the control unit ECU or being determined by the latter based on measurements carried out by the transducer T1.

With greater detail, control unit ECU acquires the actual value of the synchro engagement position during a gear engagement and computes a difference between this actual value and the reference position in order to obtain a difference value. The stored relationship associates the difference value to the actual value of the wear parameter. Alternatively, control unit ECU may compute a difference between the entire or a partial displacement as a function of time and a corresponding reference displacement to obtain a difference function; in this case, the stored relationship associates the difference function to the actual value of the wear parameter.

The reference position or displacement may be stored in the control unit ECU as a result of an arbitrary choice or of a calibration procedure of the synchromesh device 3 performed before the actual assembly in the gearbox 1 or possibly when the synchromesh device 3 is deemed in the healthy condition, for example when the actual value of the wear parameter computed by control unit ECU is in the lower range or before a given number of gear engagements from the first use of the synchromesh device 3 is carried out.

The reference position is a function of one or more measurements of the synchro engagement position during respective gear engagements, e.g. by the transducer T1. Possibly, the reference position may be a mean of the measurements such as an arithmetic mean or a weighted mean, for instance based on the number of past gear engagements.

The operation of the system 4 during a gear engagement is the implementation of a method according to the invention. Figure 6 shows the step of an embodiment of the method. Block 101 corresponds to the identification of a relationship between a first set of values or time functions indicative of a displacement of the sleeve 8 and a second set of values of a wear parameter of the synchromesh device 3.

Block 102 corresponds to the measurement of a quantity indicative of the displacement of the sleeve 8.

Block 103 corresponds to the evaluation of a first actual value or time function of the first set from the measured quantity.

Block 104 corresponds to the determination of a second actual value of the wear parameter from the evaluated first actual value or time function, based on the identified relationship.

Block 105 is optional and corresponds to the signal of the wear condition of the synchromesh device 3 to a user based on the determined second actual value.

Preferably, a wear scale is identified with a plurality of wear levels respectively associated to a plurality of ranges of the wear parameter. In this manner, the actual wear level may be determined as the level corresponding to the second actual value according to the identified scale.

More preferably, the actual wear level is signaled to the user.

In view of the foregoing, the advantages of system 4 and of the method according to the invention are apparent.

Thanks to the direct association between the synchro engagement position and the wear conditions of the synchromesh device 3, such wear conditions can be directly monitored by simply measuring the displacement of the sleeve 8 during gear engagement.

Just only one transducer T1 is needed to measure such a displacement; therefore, system 4 has a simple hardware, such that the method is simple to be implemented.

System 4 and the method allow the monitoring of the wear during operation of the gearbox 1, specifically during a gear engagement. Therefore, the user can know the actual conditions without the need of performing tests to be carried out through specific test benches.

Furthermore, the user is informed about the progress of the fault, such that the same user can choose the most appropriate time to replace the synchronizer device 3.

Finally, it is clear that modifications can be made to the described system and method, which do not extend beyond the scope of protection defined by the claims.

For example, the system may include also the synchromesh device 3 or the gearbox 1.

Furthermore, the disclosure about the determination of the actual value of the wear parameter based on the relationship is easily applicable to synchromesh devices that have not a neutral position, i.e. a position in which the sleeve is spaced from the synchronizer ring.

## Claims

1. A method for monitoring wear of a synchromesh device (3) during an engagement of a gear, wherein the synchromesh device (3) comprises a synchronizer ring (13) and a coaxial sleeve (8), and wherein the sleeve (8) is driven to be axially moved from a first position, in which the gear is disengaged, to a third position, in which the gear is engaged, through an intermediate second position, in which the sleeve (8) presses the synchronizer ring (13) against a frictional surface (17) of a gear member (10); the method comprising:
- identifying (101) a relationship between a first set of values or time functions indicative of a displacement of the sleeve (8) and a second set of values of a wear parameter of the synchromesh device (3);
- measuring (102) a quantity indicative of the displacement of the sleeve (8);
- evaluating (103) a first actual value or time function of the first set from the measured quantity; and
- determining (104) a second actual value of the wear parameter from the evaluated first actual value or time function, based on the identified relationship;
wherein said values or time functions of the first set are indicative of said second position, the second position being a substantially constant position for a time interval;
wherein said values or time functions of the first set are indicative of a difference between said second position and a corresponding reference position indicative of a healthy condition of the synchromesh device (3);
the method is **characterized in that** the identified relationship is represented by the displacements of the sleeve (8) according to a computer simulation of a plurality of complete gear engagements under the respective assumptions of different wear conditions.

2. The method of claim 1, further comprising signaling (105) a wear condition of the synchromesh device (3) to a user based on the determined second actual value.

3. The method of claim 1 or 2, further comprising:
- identifying a wear scale with a plurality of wear levels respectively associated to a plurality of ranges of the wear parameter; and
- determining, between said wear levels, an actual wear level corresponding to the second actual value according to the identified wear scale; and
- signaling the actual wear level to a user.

4. The method of any one of the foregoing claims, wherein the reference position is obtained as a function of a plurality of measurements of the second position during respective further engagements of the gear when the synchromesh device (3) is deemed in the healthy condition or during a calibration phase.

5. A system (4) for monitoring wear of a synchromesh device (3) during an engagement of a gear, wherein the synchromesh device (3) comprises a synchronizer ring (13) and a coaxial sleeve (8), and wherein the sleeve (8) is drivable to be axially moved from a first position, in which the gear is disengaged, to a third position, in which the gear is engaged, through an intermediate second position, in which the sleeve (8) presses the synchronizer ring (13) against a frictional surface (17) of a gear member (10); the system (4) comprising a sensor means (T1) for measuring a quantity indicative of a displacement of the sleeve (8) during the engagement of the gear and an electronic processing unit (ECU) connected to the sensor means (T1) for acquiring information therefrom about the measured quantity, said processing unit (ECU) storing a relationship between a first set of values or time functions indicative of a displacement of the sleeve (8) and a second set of values of a wear parameter of the synchromesh device (3); wherein the processing unit (ECU) is configured to:
- evaluate a first actual value or time function of the first set from the acquired information; and
- determining a second actual value of the wear parameter from the evaluated first actual value or time function, based on the stored relationship;
wherein the processing unit (ECU) stores a reference position corresponding to said second position when the synchromesh device (3) has a healthy condition, the second position being a substantially constant position for a time interval during the engagement of the gear, wherein said values or time functions of the first set are indicative of a difference between said second position and the corresponding reference position, **characterized in that** the identified relationship is represented by the displacements of the sleeve (8) according to a computer simulation of a plurality of complete gear engagements under the respective assumptions of different wear conditions.

6. The system of claim 5, further comprising a signaling means (S1) for signaling a wear condition of the synchromesh device (3) to a user based on the determined second actual value.

7. The system of claim 6, wherein the processing unit (ECU) stores a wear scale with a plurality of wear levels respectively associated to a plurality of ranges of the wear parameter and is further configured to determine, between said wear levels, an actual wear level corresponding to the second actual value according to the identified wear scale; said signaling means (S1) being configured for signaling the actual wear level to the user.

## Patentansprüche

1. Verfahren zur Verschleißüberwachung einer Synchronisationseinrichtung (3) während eines Eingreifens eines Zahnrads, wobei die Synchronisationseinrichtung (3) einen Synchronring (13) und eine koaxiale Buchse (8) aufweist, und wobei die Buchse (8) antreibbar ist, um axial von einer ersten Position, in der das Zahnrad nicht in Eingriff ist, in eine dritte Position, in der das Zahnrad in Eingriff ist, über eine zweite Zwischenposition, in der die Buchse (8) den Synchronring (13) gegen eine Reibfläche (17) eines Zahnradelements (20) presst, bewegt zu werden; wobei das Verfahren die nachfolgenden Schritte aufweist:
- Identifizieren (101) eines Verhältnisses zwischen einem ersten Satz von Werten oder Zeitfunktionen, die eine Verschiebung der Buchse (8) angeben, und einem zweiten Satz von Werten eines Verschleißparameters der Synchronisationseinrichtung (3);
- Messen (102) einer Größe, die eine Verschiebung der Buchse (8) angeben;
- Auswerten (103) eines ersten, tatsächlichen Werts oder einer Zeitfunktion des ersten Satzes von gemessenen Größen; und
- Bestimmen (104) eines zweiten, tatsächlichen Werts des Verschleißparameters aus dem ausgewerteten, ersten, tatsächlichen Wert oder der Zeitfunktion basierend auf dem identifizierten Verhältnis;
wobei die Werte oder die Zeitfunktionen des ersten Satzes kennzeichnend für die zweite Position sind, wobei die zweite Position für ein Zeitintervall eine im Wesentlichen konstante Position ist;
wobei die Werte oder die Zeitfunktionen des ersten Satzes kennzeichnend für eine Differenz zwischen der zweiten Position und einer entsprechenden Referenzposition sind, die kennzeichnend für einen gesunden Zustand der Synchronisationseinrichtung (3) ist;
wobei das Verfahren **dadurch gekennzeichnet ist, dass**
das identifizierte Verhältnis durch die Verschiebungen der Buchse (8) gemäß einer Computersimulation einer Mehrzahl von vollständigen Zahneingriffen unter der jeweiligen Annahme von unterschiedlichen Verschleißzuständen abgebildet wird.

2. Verfahren nach Anspruch 1, das des Weiteren ein Signalisieren (105) eines Verschleißzustands der Synchronisationseinrichtung (3) an eine Bedienperson basierend auf dem bestimmten, zweiten, tatsächlichen Wert aufweist.

3. Verfahren nach Anspruch 1 oder 2, das des Weiteren die nachfolgenden Schritte aufweist:
- Identifizieren einer Verschleißmaßstabs mit einer Mehrzahl von Verschleißwerten, die entsprechend zu einer Mehrzahl von Bereichen des Verschleißparameters gehören; und
- Bestimmen, aus den Verschleißwerten, eines tatsächlichen Verschleißwertes, der dem zweiten, tatsächlichen Wert gemäß dem identifizierten Verschleißmaßstab entspricht; und
- Signalisieren des tatsächlichen Verschleißwertes an eine Bedienperson.

4. Verfahren nach einem der vorhergehenden Ansprüche, wobei die Referenzposition als eine Funktion aus einer Mehrzahl von Messungen der zweiten Position während jeweiligen weiteren Eingriffen des Zahnrads ermittelt wird, wenn angenommen ist, dass die Synchronisationseinrichtung (3) sich in dem gesunden Zustand oder sich während einer Kalibrierungsphase befindet.

5. System (4) zur Verschleißüberwachung einer Synchronisationseinrichtung (3) während eines Eingriffs eines Zahnrads, wobei die Synchronisationseinrichtung (3) einen Synchronring (13) und eine koaxiale Buchse (8) aufweist, und wobei die Buchse (8) antreibbar ist, um axial von einer ersten Position, in der das Zahnrad im Eingriff ist, in eine dritte Position, in der das Zahnrad im Eingriff ist, über eine zweite Zwischenposition, in der die Buchse (8) den Synchronring (13) gegen eine Reibfläche (17) eines Zahnradelements (20) presst, bewegt zu werden; wobei das System (4) eine Sensoreinrichtung (T1) zum Messen einer Größe, die eine Verschiebung der Buchse (8) während des Eingriffs des Zahnrads angibt, und eine elektronische Verarbeitungseinheit (ECU) aufweist, die mit der Sensoreinrichtung (T1) zum Erfassen von Informationen davon über die gemessenen Größen verbunden ist, wobei die Verarbeitungseinheit (ECU) ein Verhältnis zwischen einem ersten Satz von Werten oder Zeitfunktionen, die eine Verschiebung der Buchse (8) angibt, und einem zweiten Satz von Werten eines Verschleißparameters der Synchronisationseinrichtung (3) speichert; wobei die Verarbeitungseinheit (ECU) eingerichtet ist zum:
- Auswerten eines ersten, tatsächlichen Werts oder einer Zeitfunktion des ersten Satzes der erfassten Informationen; und
- Bestimmen eines zweiten, tatsächlichen Werts des Verschleißparameters von dem ausgewerteten, ersten, tatsächlichen Wert oder Zeitfunktion basierend auf dem gespeicherten Verhältnis;
wobei die Verarbeitungseinheit (ECU) eine Referenzposition, die der zweiten Position entspricht, speichert, wenn die Synchronisationseinrichtung (3) einen gesunden Zustand aufweist, wobei die zweite Position eine im Wesentlichen konstante Position für ein Zeitintervall während des Eingreifens des Zahnrads ist, wobei die Werte oder die Zeitfunktionen des ersten Satzes kennzeichnend für eine Differenz zwischen der zweiten Position und der entsprechenden Referenzposition sind, **dadurch gekennzeichnet, dass** das identifizierte Verhältnis mit den Verschiebungen der Buchse (8) gemäß einer Computersimulation einer Mehrzahl von vollständigen Zahneingriffen, unter den entsprechenden Annahmen von unterschiedlichen Verschleißzuständen, abgebildet wird.

6. System nach Anspruch 5, das des Weiteren ein Signalisierungsmittel (S1) zum Signalisieren eines Verschleißzustands der Synchronisationseinrichtung (3) an eine Bedienperson basierend auf dem bestimmten, zweiten, tatsächlichen Wert aufweist.

7. System nach Anspruch 6, wobei die Verarbeitungseinheit (ECU) einen Verschleißmaßstab mit einer Mehrzahl von Verschleißwerten, die entsprechend zu einer Mehrzahl von Bereichen des Verschleißparameters gehören, speichert, und die des Weiteren dazu eingerichtet ist, aus den Verschleißwerten einen tatsächlichen Verschleißwert zu bestimmen, der zu dem zweiten, tatsächlichen Wert gemäß des identifizierten Verschleißmaßstabs gehört;
wobei das Signalisierungsmittel (S1) dazu eingerichtet ist, den aktuellen Verschleißwert an die Bedienperson zu signalisieren.

## Revendications

1. Procédé de surveillance de l'usure d'un dispositif de synchronisation (3) pendant la mise en prise d'un engrenage, dans lequel le dispositif de synchronisation (3) comprend une bague de synchroniseur (13) et un manchon coaxial (8), et dans lequel le manchon (8) est entraîné pour être déplacé de manière axiale d'une première position, dans laquelle l'engrenage est désengagé, à une troisième position, dans laquelle l'engrenage est engagé, en passant par une deuxième position intermédiaire, dans laquelle le manchon (8) presse la bague de synchroniseur (13) contre une surface de frottement (17) d'un élément de l'engrenage (10) ; le procédé comprenant :
- l'identification (101) d'une relation entre un premier ensemble de valeurs ou de fonctions temporelles indiquant un déplacement du manchon (8) et un second ensemble de valeurs d'un paramètre d'usure du dispositif de synchronisation (3) ;
- la mesure (102) d'une quantité indiquant le déplacement du manchon (8) ;
- l'évaluation (103) d'une première valeur réelle ou d'une fonction temporelle du premier ensemble à partir de la quantité mesurée ; et
- la détermination (104) d'une seconde valeur réelle du paramètre d'usure à partir de la première valeur réelle ou fonction temporelle évaluée, selon la relation identifiée ;
dans lequel lesdites valeurs ou fonctions temporelles du premier ensemble sont indicatives de ladite deuxième position, la deuxième position étant une position sensiblement constante pendant un intervalle de temps ;
dans lequel lesdites valeurs ou fonctions temporelles du premier ensemble sont indicatives d'une différence entre ladite deuxième position et une position de référence correspondante indicative d'un état sain du dispositif de synchronisation (3) ;
le procédé est **caractérisé en ce que**
la relation identifiée est représentée par les déplacements du manchon (8) selon une simulation informatique d'une pluralité de mises en prise complètes de l'engrenage sous les hypothèses respectives de différentes conditions d'usure.

2. Procédé selon la revendication 1, comprenant en outre la signalisation (105) d'une condition d'usure du dispositif de synchronisation (3) à un utilisateur en fonction de la seconde valeur réelle déterminée.

3. Procédé selon la revendication 1 ou la revendication 2, comprenant en outre :
- l'identification d'une échelle d'usure avec une pluralité de niveaux d'usure respectivement associés à une pluralité de plages du paramètre d'usure ; et
- la détermination, entre lesdits niveaux d'usure, d'un niveau d'usure réel correspondant à la seconde valeur réelle selon l'échelle d'usure identifiée ; et
- la signalisation du niveau d'usure réel à un utilisateur.

4. Procédé selon l'une quelconque des revendications précédentes, dans lequel la position de référence est obtenue en fonction d'une pluralité de mesures de la deuxième position pendant d'autres mises en prise respectives de l'engrenage lorsque le dispositif de synchronisation (3) est considéré dans un état sain ou lors d'une phase d'étalonnage.

5. Système (4) de surveillance de l'usure d'un dispositif de synchronisation (3) pendant la mise en prise d'un engrenage, dans lequel le dispositif de synchronisation (3) comprend une bague de synchroniseur (13) et un manchon coaxial (8), et dans lequel le manchon (8) peut être entraîné pour être déplacé de manière axiale d'une première position, dans laquelle l'engrenage est désengagé, à une troisième position dans laquelle l'engrenage est engagé, en passant par une deuxième position intermédiaire dans laquelle le manchon (8) presse la bague de synchroniseur (13) contre une surface de frottement (17) d'un élément d'engrenage (10) ; le système (4) comprenant un moyen de détection (T1) pour mesurer une valeur indicative d'un déplacement du manchon (8) pendant la mise ne prise de l'engrenage et une unité de traitement électronique (ECU) raccordée au moyen de détection (T1) pour acquérir des informations en provenance de celui-ci concernant la valeur mesurée, ladite unité de traitement (ECU) stockant une relation entre un premier ensemble de valeurs ou de fonctions temporelles indicatives d'un déplacement du manchon (8) et un second ensemble de valeurs d'un paramètre d'usure du dispositif de synchronisation (3) ; dans lequel l'unité de traitement (ECU) est configurée pour :
- évaluer une première valeur réelle ou une fonction temporelle du premier ensemble à partir des informations acquises ; et
- déterminer une seconde valeur réelle du paramètre d'usure à partir de la première valeur réelle ou fonction temporelle évaluée, selon la relation mémorisée ;
dans lequel l'unité de traitement (ECU) mémorise une position de référence correspondant à ladite deuxième position lorsque le dispositif de synchronisation (3) se trouve dans un état sain, la deuxième position étant une position sensiblement constante pendant un intervalle de temps au cours de la mise en prise de l'engrenage, dans lequel lesdites valeurs ou fonctions temporelles du premier ensemble sont indicatives d'une différence entre ladite deuxième position et la position de référence correspondante, **caractérisée en ce que** la relation identifiée est représentée par les déplacements du manchon (8) selon une simulation informatique d'une pluralité de mises en prise complètes d'engrenages sous les hypothèses respectives de différentes conditions d'usure.

6. Système selon la revendication 5, comprenant en outre un moyen de signalisation (S1) pour signaler une condition d'usure du dispositif de synchronisation (3) à un utilisateur en fonction de la seconde valeur réelle déterminée.

7. Système selon la revendication 6, dans lequel l'unité de traitement (ECU) mémorise une échelle d'usure avec une pluralité de niveaux d'usure respectivement associés à une pluralité de plages du paramètre d'usure et est en outre configurée pour déterminer, entre lesdits niveaux d'usure, un niveau d'usure réel correspondant à la seconde valeur réelle selon l'échelle d'usure identifiée ;
ledit moyen de signalisation (S1) étant configuré pour signaler le niveau d'usure réel à l'utilisateur.
